# EUROPEAN PATENT APPLICATION

(11) **EP 2 187 693 A1**
(43) Date of publication of application: **19.05.2010**
(21) Application number: 07792401.7
(22) Date of filing: 10.08.2007
(51) Int. Cl.: H04W 84/00

(54) **RADIO BASE STATION DEVICE, RADIO MOBILE STATION DEVICE, AND TRANSMISSION CONTROL METHOD FOR RANDOM ACCESS SIGNAL**

(71) Applicant: Fujitsu Limited, Kawasaki-shi, Kanagawa 211-8588 (JP)
(72) Inventor: TAJIMA, Yoshiharu, Kawasaki-shi Kanagawa 211-8588 (JP); OBUCHI, Kazuhisa, Kawasaki-shi Kanagawa 211-8588 (JP); TANAKA, Yoshinori, Kawasaki-shi Kanagawa 211-8588 (JP); KAWASAKI, Yoshihiro, Kawasaki-shi Kanagawa 211-8588 (JP); OHTA, Yoshiaki, Kawasaki-shi Kanagawa 211-8588 (JP); SUGIYAMA, Katsumasa, Kawasaki-shi Kanagawa 211-8588 (JP)
(74) Representative: Ward, James Norman
(86) International application number: PCT/JP2007/065756
(87) International publication number: WO 2009/022393

(57) **Abstract**

To prevent connection delay or disconnection.

A wireless base station apparatus (1) has a reporting unit (4) which reports information on a transmission area that allows transmission of a random access signal. Accordingly, the first transmission area is wholly reported to mobile station apparatuses within an area of the wireless base station apparatus (1). That is, both a mobile station apparatus in a non-handover state and a mobile station apparatus in a handover state receive the first transmission area information (report information) and use the first transmission area as a transmission area for transmitting a random access signal to the wireless base station apparatus (1). The wireless base station apparatus (1) also has a notifying unit (3) which notifies a second transmission area to a mobile station apparatus in a handover state, the second transmission area being different from the first transmission area reported by the reporting unit (4) of the handover-destination wireless base station apparatus (1).

## Description

### Technical Field

The embodiments discussed herein are related to a wireless base station apparatus, a wireless mobile station apparatus, and a transmission control method for a random access signal.

### Background Art

In a mobile communication system including base stations and mobile stations such as cell phones, a cellular communication system has become the mainstream. The cellular communication system is a system for covering a large area by a combination of a plurality of areas (cells) including ranges allowing a base station to perform transmission and reception and for continuing communication while switching a currently communicating base station accompanying movement of a mobile station.

A third generation mobile communication system using a CDMA (Code Division Multiple Access) system has started services. Further, a next generation mobile communication system enabling higher-speed communication has been extensively studied (see, e.g., Non-Patent Document 1). In 3GPP (Third Generation Partnership Project), for example, LTE (Long Term Evolution) has been studied as the next generation mobile communication system.

In the mobile communication system, when a base station and a mobile station start communication, a channel used for the mobile station to perform the first transmission is prepared. In the 3GPP, this channel is referred to as a random access channel (RACH), and a procedure for starting communication using the RACH is referred to as random access.

The RACH contains information for enabling a base station to identify transmission from a mobile station. The RACH is used at the start of communication, and an individual channel (or, a common channel) is used for subsequent communication. Therefore, unless a plurality of mobile stations simultaneously use the RACH, the mobile stations can share the RACH. Accordingly, an identifier (identification data) referred to as a "signature" is applied to the RACH. This enables a base station to identify a plurality of mobile stations that simultaneously perform transmission using the RACH.

The random access is performed during the first transmission, the handover, and the returning operation after connection release. In the case of the first transmission, a mobile station (randomly) selects one pattern from among a plurality of patterns (codes) referred to as signatures, and uses the selected signature. Accordingly, a plurality of mobile stations may simultaneously perform transmission using the same signature, even though this probability is low. In the case of the handover, the above-described signature collision causes intermittent discontinuity or may cause communication disconnection. To cope with this problem, a method of previously assigning an individual signature to a mobile station in a handover state is considered in the LTE.
Non-Patent Document 1: 3GPP TS36.300.V8.1.0 (2007-06)
Non-Patent Document 2: Panasonic, Random Access Preamble signatures usage, R2-071143, 3GPP TSG RAN WG2 #57bis 26th-30th March, St Julian's Malta

### Disclosure of Invention

### Problems to be Solved by the Invention

As described above, a random access channel can be used simultaneously by a plurality of mobile stations with application of signatures. In the LTE, for example, 6-bit (64 ways) signatures can be used.

However, these mobile stations may simultaneously perform handover in a place where many mobile stations gather, such as on a train. In this case, the number of signatures exceeds the total number of usable signatures and a signature to be assigned is insufficient. This causes handover delay or communication disconnection. Measures against this problem have been studied in the Non-Patent Document 2. However, a specific method for realizing the measures has not been specified in the Non-Patent Document 2.

The present invention has been made in view of the above-described circumstances and has objects to provide a wireless base station apparatus, a wireless mobile station apparatus, and a transmission control method for a random access signal, which can prevent connection delay or communication disconnection.

### Means for Solving the Problems

To solve the above-described problems, according to a first aspect of the present invention, there is provided a wireless base station apparatus. This wireless base station apparatus includes: a notifying unit which notifies a wireless mobile station apparatus in a handover state of a second transmission area as a transmission area for a random access signal, the second transmission area being different from the first transmission area reported as a transmission area for a random access signal in a handover destination.

According to a second aspect of the present invention, there is provided a wireless base station apparatus. This wireless base station apparatus includes: a receiver which receives information on a wireless mobile station apparatus in a handover state from a handover-source wireless base station apparatus of the wireless mobile station apparatus; and a notifying unit which notifies a second transmission area to the wireless mobile station apparatus via the handover-source wireless base station apparatus, the second transmission area being different from a first transmission area reported as a transmission area for a random access signal.

According to a third aspect of the present invention, there is provided a wireless mobile station apparatus for transmitting a random access signal. This wireless mobile station apparatus includes: a receiver which receives a notification of a second transmission area during handover, the second transmission area being different from a first transmission area reported by a handover-destination wireless base station apparatus; and a transmitter which transmits a random access signal using the notified second transmission area.

According to a fourth aspect of the present invention, there is provided a transmission control method for a random access signal. This transmission control method includes: notifying a wireless mobile station apparatus in a handover state of a second transmission area which is different from a first transmission area reported as a transmission area for a random access signal in a handover destination; and receiving a random access signal transmitted from the wireless mobile station apparatus using the second transmission area.

### Advantage of the Invention

According to the present invention, a wireless mobile station apparatus in a handover state is notified of the second transmission area different from the reported first transmission area. This enables the wireless mobile station apparatus in a handover state to easily and surely establish connection using the second transmission area.

The above and other objects, features and advantages of the present invention will become apparent from the following description when taken in conjunction with the accompanying drawings which illustrate preferred embodiments of the present invention by way of example.

### Brief Description of Drawings

FIG. 1 outlines the present invention;
FIG. 2 is a block diagram of a mobile communication system according to a first embodiment of the invention;
FIG. 3 is a block diagram of a base station apparatus;
FIG. 4 is a block diagram of a mobile station apparatus;
FIG. 5 is a sequence diagram illustrating a transmission control method for a random access signal in a mobile communication system;
FIG. 6 is a flowchart illustrating signature determination processing;
FIG. 7 is a block diagram of a base station apparatus according to a second embodiment of the invention; and
FIG. 8 is a flowchart illustrating handover processing according to the second embodiment.

### Best Mode for Carrying Out the Invention

The embodiment of the present invention will be described in detail below with reference to the accompanying drawings, wherein like reference numerals refer to like elements throughout.

First, an outline of the present invention will be described and then, the embodiments will be described.

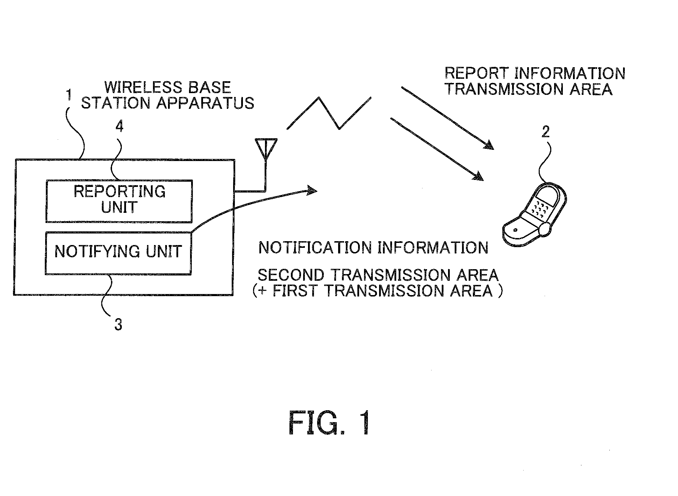

FIG. 1 outlines the present invention.

A wireless base station apparatus 1 illustrated in FIG. 1 includes a reporting unit 4 which reports information on a transmission area that allows transmission of a random access signal. Accordingly, the first transmission area is wholly reported to mobile station apparatuses within an area of the wireless base station apparatus 1. That is, both a mobile station apparatus in a non-handover state and a mobile station apparatus in a handover state receive the first transmission area information (report information) and use the first transmission area as a transmission area for transmitting a random access signal to the wireless base station apparatus 1.

The wireless base station apparatus 1 also has a notifying unit 3 which notifies a second transmission area to a mobile station apparatus 2 in a handover state, the second transmission area being different from the first transmission area reported by the reporting unit 4 of the handover-destination wireless base station apparatus 1. Preferably, this notification is not notified to a mobile station apparatus in a non-handover state.

When a plurality of candidates for the handover-destination wireless base station apparatuses exist, the notifying unit 3 may notify a transmission area (A) that is not reported, as a transmission area for a random access signal, by any one of the candidates. Alternatively, the notifying unit 3 may notify a transmission area (Bi) that is not reported, as a transmission area for a random access signal, by one wireless base station apparatus (i) determined as a handover-destination.

The transmission area may be stored in a storage unit of the wireless base station apparatus 1, or may be obtained from adjacent wireless base station apparatuses.

When storing the transmission area, the wireless base station apparatus 1 may store the transmission area (A) or may store the transmission area (Bi) associated with the wireless base station apparatus (i) to notify information on a transmission area corresponding to a handover-destination wireless base station apparatus.

Further, the notifying unit 3 may notify, when performing notification, the second transmission area and the first transmission area to the mobile station apparatus 2 in a handover state. This makes it possible to increase candidates for transmission areas selectable by the mobile station apparatus 2, and to disperse random access signals. Further, the notifying unit 3 may notify, when predetermined conditions are satisfied, the second transmission area to the mobile station apparatus 2 in a handover state. The predetermined conditions include a case where congestion of random access signals is predicted in the first transmission area of the handover-destination.

The embodiment of the present invention will be described below.

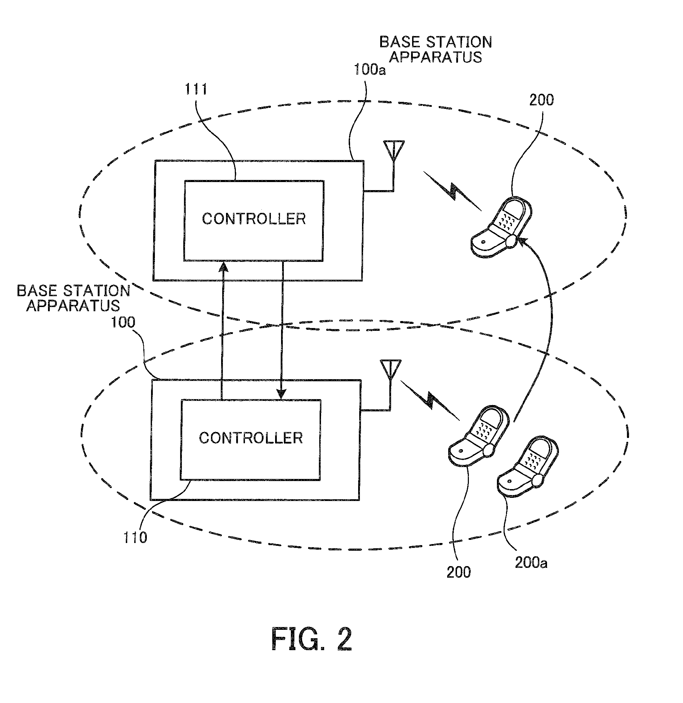

FIG. 2 is a block diagram of a mobile communication system according to a first embodiment.

The mobile communication system has a plurality of base station apparatuses (two base station apparatuses 100 and 100a in FIG. 2) and a plurality of mobile station apparatuses (two mobile station apparatuses 200 and 200a in FIG. 2).

The mobile station apparatuses 200 and 200a are, for example, terminal devices such as cell phones. The mobile station apparatuses 200 and 200a periodically transmits, to the base station apparatuses 100 and 100a, a measurement report including reception quality information (reception level (information on radio field intensity)) on signals transmitted from the base station apparatuses 100 and 100a. Alternatively, the mobile station apparatuses 200 and 200a periodically transmit the measurement report when the reception quality for a currently communicating base station apparatus is lower than the threshold.

The base station apparatuses 100 and 100a have controllers 110 and 111, respectively, which determine based on the measurement report whether handover of the mobile station apparatuses 200 and 200a is necessary. The base station apparatuses 100 and 100a perform, via the controllers 110 and 111, data transmission and reception and communication on handover with other base station apparatuses.

FIG. 2 illustrates a case where the mobile station apparatus 200 moves from a communication area of the base station apparatus 100 to a communication area of the base station apparatus 100a. In this case, the base station apparatus 100a (handover-destination base station apparatus) receives a handover request of the mobile station apparatus 200 from the base station apparatus 100 (handover-source base station apparatus).

When receiving the handover request, the base station apparatus 100a performs the after-mentioned handover processing, thereby receiving a random access signal from the mobile station apparatus 200.

Next, functions of the base station apparatuses 100 and 100a will be described. Since the base station apparatuses 100 and 100a have the same functions, the function of the base station apparatus 100 will be representatively described.

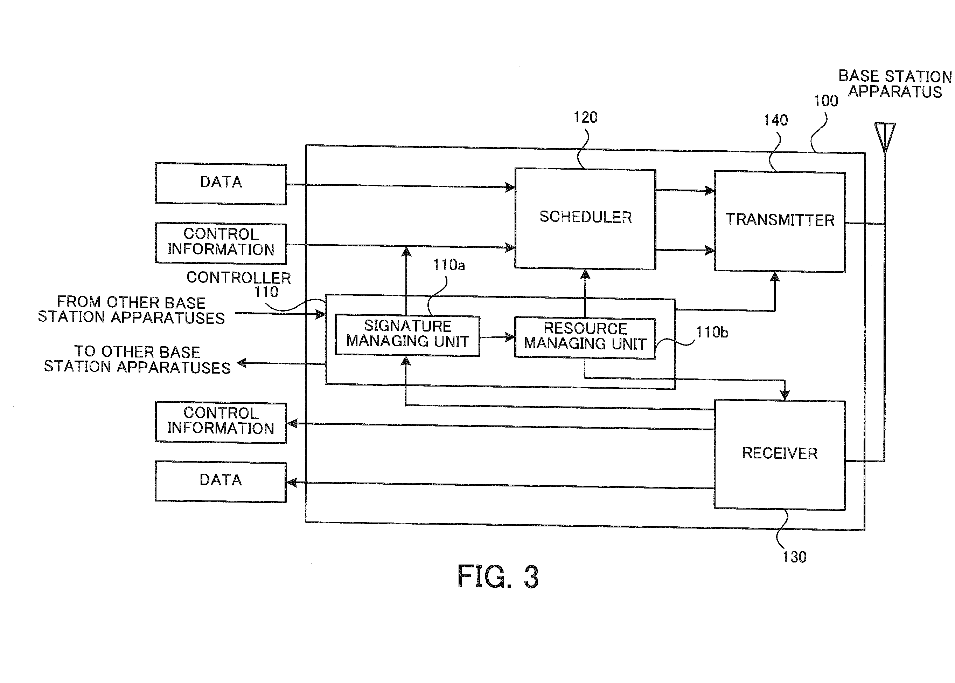

FIG. 3 is a block diagram of the base station apparatus 100.

The base station apparatus 100 has a scheduler 120, a receiver 130, and a transmitter 140 in addition to the controller 110.

The controller 110 performs data transmission and reception with the mobile station apparatuses 200 and 200a via the receiver 130 and the transmitter 140.

This controller 110 has a signature managing unit (determining unit) 110a and a resource managing unit 110b.

The signature managing unit 110a notifies, when receiving a handover request, the second transmission area to the mobile station apparatuses (preferably, notifies the second transmission area only to the mobile station apparatus) via the handover-source base station apparatus, the second transmission area being not included in the reported first transmission area that is a transmission area for a random access signal. Preferably, the signature managing unit 110a simultaneously notifies the mobile station apparatuses 200 and 200a of a signature (assigned signature) to be used when transmitting a random access signal using the second transmission area. These notifications are preferably included in a handover command.

This enables the mobile station apparatus in a handover state to transmit a random access signal using, as an available transmission area for a random access signal, a transmission area not reported to other mobile station apparatuses under control of the handover-destination wireless base station. Accordingly, this enables the mobile station apparatus in a handover state to avoid competition with other mobile station apparatuses that transmit a random access signal at the start of communication.

The signature managing unit 110a may notify the mobile station apparatus of the second transmission area when predetermined criteria are satisfied. When the predetermined criteria are not satisfied, even when receiving the handover request, the signature managing unit 110a may cause the mobile station apparatus to transmit a random access signal using the first transmission area without notifying the mobile station apparatus of the second transmission area. On this occasion, the signature managing unit 110a may notify the mobile station apparatus of a random access signal (assigned signature) to be transmitted using the first transmission area.

The signature managing unit 110a manages the assigned signature. Specifically, the signature managing unit 110a sets an assignment state flag for the assigned signature, and manages as a free signature a signature for which the assignment state flag is not set. When random access processing is completed and a signature becomes unnecessary, the signature managing unit 110a may of course release the flag (reset the flag).

The predetermined criteria used may be an assignment state of signatures. For example, when N% (e.g., 85%) of the total number of signatures is assigned, the signature managing unit 110a determines that the predetermined criteria are satisfied.

When notifying the mobile station apparatus of the second transmission area, the signature managing unit 110a of the handover-destination base station apparatus 100 instructs the resource managing unit 110b to secure the second transmission area. That is, the resource managing unit 110b controls the previously allowed other usages such as user data transmission to use the second transmission area as a transmission area for a random access signal. Further, the resource managing unit 110b instructs the scheduler 120 to make scheduling excluding the second transmission area.

The scheduler 120 makes scheduling, when allocating resources to user data, so as not to allocate the user data to the newly-secured second transmission area. Specifically, before the second transmission area is newly secured, the scheduler 120 may use the second transmission area as a transmission area for user data without securing the second transmission area as a transmission area for a random access signal.

The transmitter 140 transmits a control signal such as a random access response supplied to the scheduler 120. Data and control information may be generated by the base station apparatus 100 or may be transferred from other base station apparatuses.

Accordingly, the transmitter 140 transmits, as report information, the transmission area for a random access signal. At the same time, the transmitter 140 incorporates the assigned signature and the second transmission area information into the handover command (control information) supplied to a specific mobile station apparatus in a handover state, and transmits the resultant handover command.

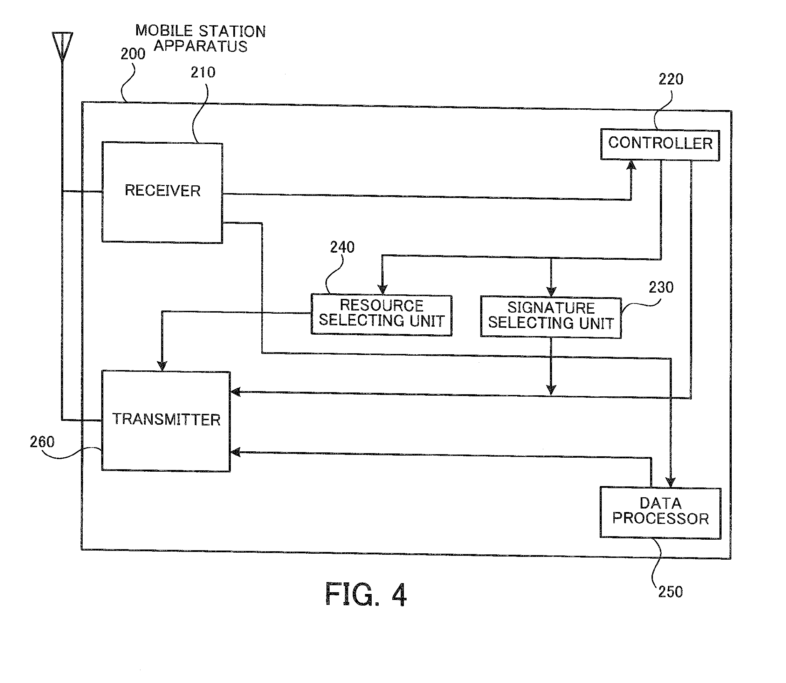

FIG. 4 is a block diagram of the mobile station apparatus 200.

The mobile station apparatus 200 has a receiver 210, a controller 220, a signature selecting unit 230, a resource selecting unit 240, a data processor 250, and a transmitter 260.

The receiver 210 receives data and control information from the base station apparatus 100 or 100a, transfers the data to the data processor 250, and transfers the control information to the controller 220.

The controller 220 transfers the received control information to the transmitter 260. Here, the controller 220 determines, during the handover, whether the control information contains the second transmission area and an assigned signature to be transmitted as a random access signal (whether a signature to be used and the second transmission area are instructed by the base station apparatus 100 or 100a). When both of the signature and the second transmission area are instructed, the controller 220 transfers the signature to the signature selecting unit 230 and transfers the second transmission area information to the resource selecting unit 240. When only a signature is instructed, the controller 220 transfers the signature to the signature selecting unit 230 and transfers the previously notified resource information (the first transmission area information) to the resource selecting unit 240.

The signature selecting unit 230 has a predetermined function. When receiving a signature from the controller 220, the signature selecting unit 230 multiplies the signature by a data string and generates a random access signal. Meanwhile, when a signature to be used is not instructed by the base station apparatus, the signature selecting unit 230 selects a signature at random, and generates a random access signal.

The resource selecting unit 240 transfers, when receiving the second transmission area information from the controller 220, the random access signal to the transmitter 260 using the second transmission area.

The data processor 250 processes the received data. Further, the data processor 250 transfers, to the transmitter 260, data to be transmitted to the base station apparatus 100 or 100a.

When receiving the data and the control information, the transmitter 260 transmits them to the currently communicating base station apparatus 100.

In addition, the transmitter 260 transmits the random access signal to the handover-destination base station apparatus using the second transmission area.

As described above, when the second transmission area information and the signature to be used are instructed, the mobile station apparatus 200 transmits the random access signal using the instructed signature and second transmission area information during the handover. When only the signature is instructed, the mobile station apparatus 200 uses a known transmission area. When also the signature is not instructed, the mobile station apparatus 200 transmits the random access signal for the handover using a randomly selected signature.

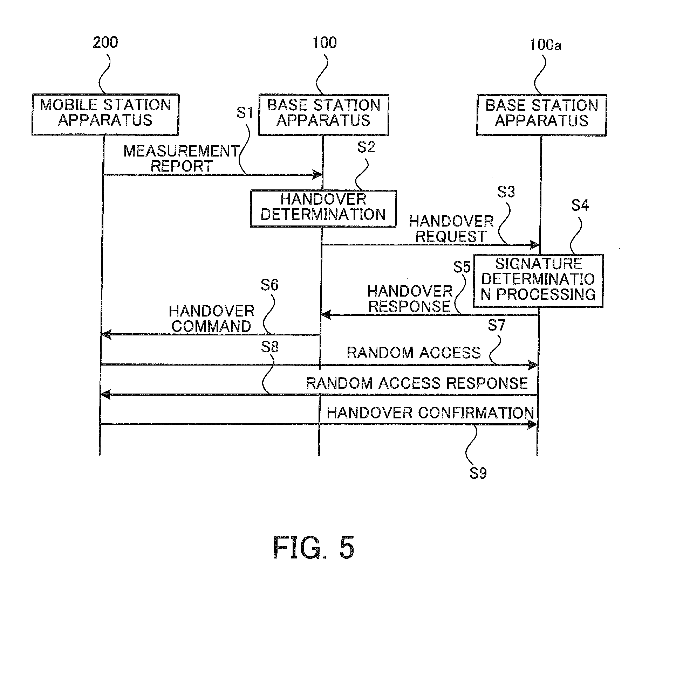

FIG. 5 is a sequence diagram illustrating a transmission control method for a random access signal in a mobile communication system.

Based on a measurement report such as reception propagation environments from the mobile station apparatus 200 (step S1), the base station apparatus 100 determines whether the handover (HO) is necessary (step S2).

When determining that the handover is necessary, the base station apparatus 100 makes a handover request to the base station apparatus 100a (step S3).

The handover-destination base station apparatus 100a assigns a signature to the mobile station apparatus 200. At this time, the handover-destination base station apparatus 100a performs signature determination processing (step S4). When a signature that can be transmitted is insufficient in the first transmission area, the handover-destination base station apparatus 100a newly secures a second transmission area. Then, the base station apparatus 100a selects a signature to be transmitted using the second transmission area, and notifies the base station apparatus 100 of the second transmission area information and the selected signature (handover response) (step S5). Here, since the first and second transmission areas are separate transmission areas, the same signature can be used in both of the first and second transmission areas.

The base station apparatus 100 transmits to the mobile station apparatus 200 a handover instruction (handover command) together with the notified second transmission area and signature (step S6).

This instruction is individually performed, and corresponds to a notification rather than a report.

The mobile station apparatus 200 transmits a random access signal to the base station apparatus 100a using the notified second transmission area and signature (step S7).

The base station apparatus 100a receives the random access signal and transmits a random access response to the mobile station apparatus 200 (step S8).

The mobile station apparatus 200 receives the random access response, and transmits handover confirmation (step S9). Thus, the handover is completed.

Next, the signature determination processing in step S4 will be described.

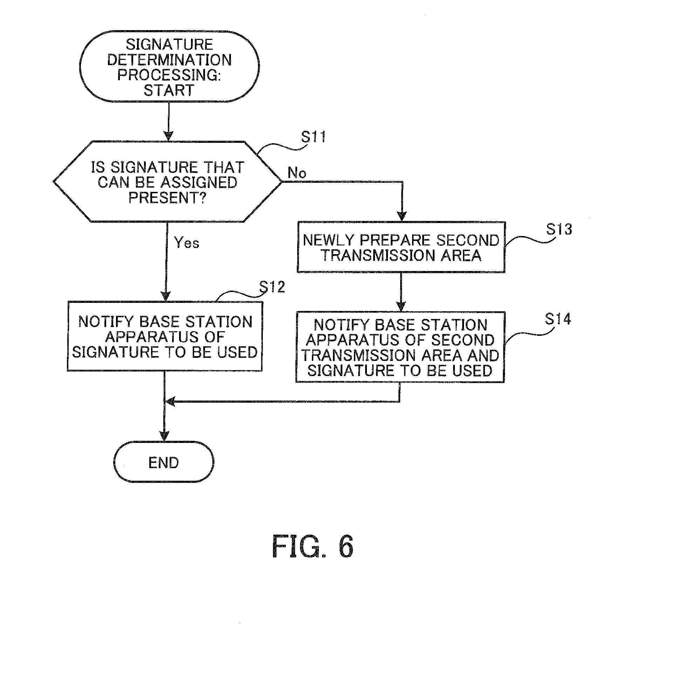

FIG. 6 is a flowchart illustrating the signature determination processing.

When receiving the handover request, the base station apparatus 100a first determines whether a signature that can be assigned is present when using, as a transmission area for a random access signal, the first transmission area reported as the report information (step S11).

If a signature that can be assigned is present (Yes in step S11), the base station apparatus 100a notifies the base station apparatus 100 of a signature to be used (step S12).

Meanwhile, if a signature that can be assigned is absent (No in step S11), the base station apparatus 100a newly prepares a second transmission area as a transmission area for a random access signal (step S13), and notifies the base station apparatus 100 of the second transmission area and a signature to be transmitted using the second transmission area (step S14). Thus, the signature determination processing is ended.

As described above, according to the mobile communication system of the present embodiment, when a signature that can be assigned is insufficient, the base station apparatus 100a separately secures a second transmission area, and assigns a signature. Then, the base station apparatus 100a notifies the mobile station apparatus 200 in a handover state of the second transmission area information. This enables many mobile station apparatuses to perform random access using a new RACH even under the condition that the mobile station apparatuses simultaneously perform the handover and a signature that can be assigned is insufficient. Accordingly, this makes it possible to easily prevent connection delay or communication disconnection. Further, the mobile station apparatus 200 has the resource selecting unit 240. This enables the mobile station apparatus 200 to know, even if the received transmission area is different from the previously assigned transmission area, the different transmission area information.

It is considered that occurrence of simultaneous and frequent handovers accompanying movement of a train may be predicted to some extent based on arrival of many measurement reports to a handover-source base station apparatus or based on measurement by a handover-source or handover-destination base station apparatus. Next, a mobile communication system according to a second embodiment using these characteristics will be described.

The mobile communication system according to the second embodiment will be described below mainly on the difference from the above-described mobile communication system according to the first embodiment. The description of the same items will not be repeated here.

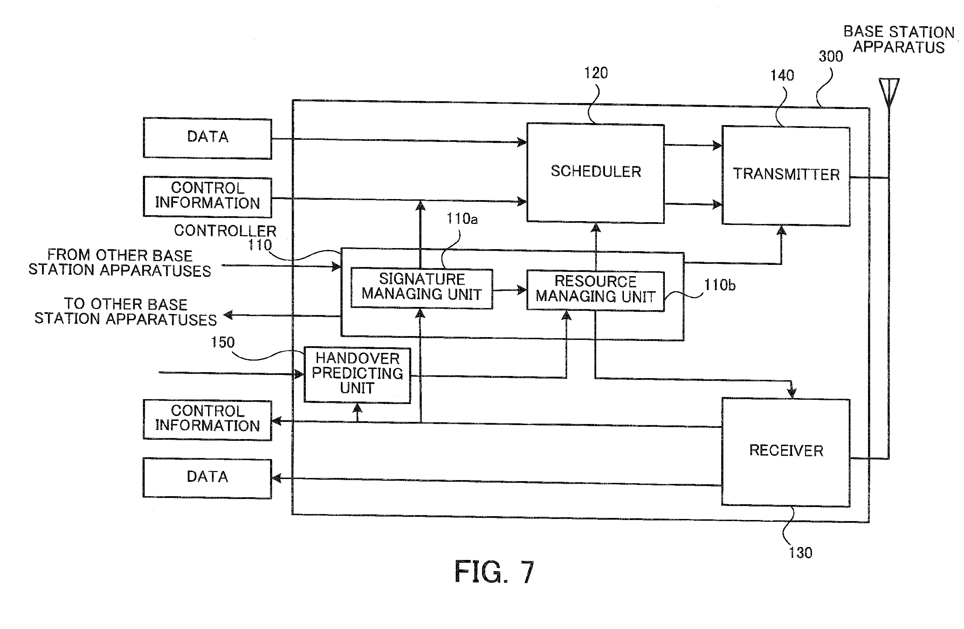

FIG. 7 is a block diagram of a base station apparatus according to the second embodiment.

A base station apparatus 300 has a handover predicting unit 150.

The handover predicting unit 150 has a function of previously detecting prediction of whether frequent handovers occur based on information from other base station apparatuses. When predicting frequent handovers, the handover predicting unit 150 instructs the resource managing unit 110b to secure a second transmission area different from a first transmission area reported, as report information, by the handover-destination base station apparatus.

Examples of the criteria used by the handover predicting unit 150 when instructing the resource managing unit 110b to newly secure the second transmission area may include a condition where the number of the received measurement reports is smaller by a predetermined number than the total number of the signatures used in the transmission of the random access signals, and a condition where the number of the received measurement reports is equal to the total number of the signatures used in the transmission of the random access signals.

When the criteria are satisfied, the resource managing unit 110b assigns a newly secured second transmission area and any one of the selected signatures to a mobile station apparatus in a handover state.

Next, handover processing according to the second embodiment will be described.

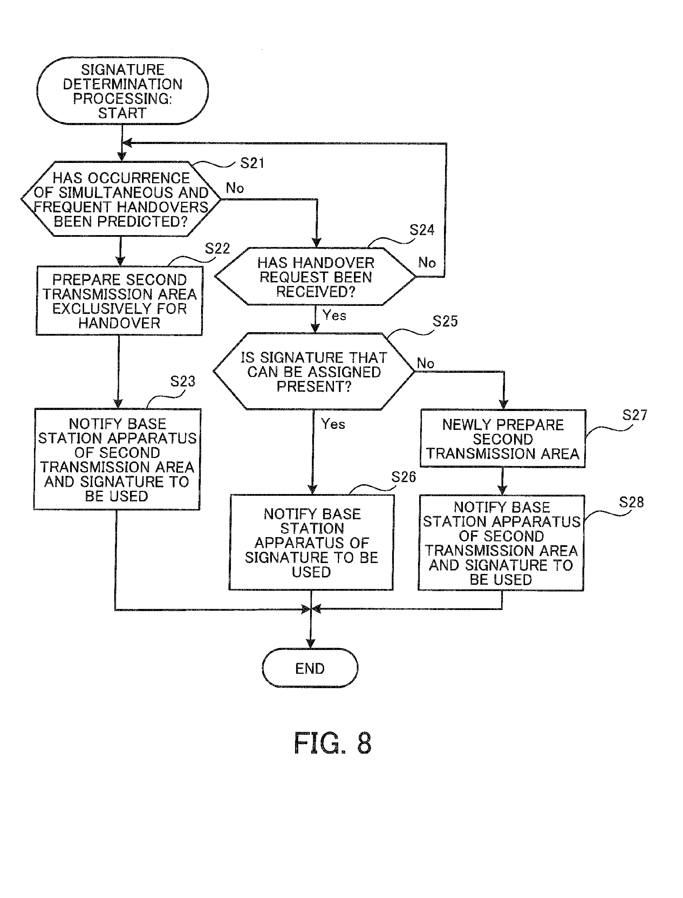

FIG. 8 is a flowchart illustrating the handover processing according to the second embodiment.

The handover predicting unit 150 of the base station apparatus 300 predicts, based on its own measurement result or information obtained via the network, whether simultaneous and frequent handovers occur (step S21). If predicting occurrence of simultaneous and frequent handovers (Yes in step S21), the base station apparatus 300 secures an RACH resource (the second transmission area) exclusively for the handover, which is individually notified to the mobile station apparatus in a handover state (step S22). Then, the handover predicting unit 150 notifies the mobile station apparatus in a handover state of the RACH resource (the second transmission area) to be used and a signature to be transmitted using the second transmission area (step S23).

Meanwhile, if predicting that simultaneous and frequent handovers are prevented from occurring (No in step S21), the handover predicting unit 150 determines whether to receive a handover request (step S24). If receiving no handover request (No in step S24), the process returns to step S21, and operations of step S21 and subsequent steps are repeated.

Meanwhile, if receiving the handover request (Yes in step S24), the processing of step S25 and subsequent steps is performed. The processing from step S25 to step S28 is the same as that from step S11 to step S14 in FIG. 6, respectively, and therefore, the description will not be repeated here.

According to the mobile communication system of the second embodiment, when predicting simultaneous and frequent handovers, the base station apparatus 300 (handover-destination base station apparatus) prepares the RACH exclusively for the handover. This processing makes it possible to quickly cope with the simultaneous and frequent handovers without exerting an influence on the normal random access control performed using the first transmission area.

The wireless base station apparatus, wireless mobile station apparatus, and transmission control method for a random access signal according to the present invention are described above based on the illustrated embodiments. However, the present invention is not limited to these embodiments. The constitution of each unit may be replaced with an arbitrary constitution having the same function. In addition, other arbitrary constituents and processes may be added to the present invention.

Further, the present invention may be a combination of two or more arbitrary constitutions (features) of the foregoing respective embodiments.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals and Signs

1: Wireless base station apparatus
2: Mobile station apparatus
3: Notifying unit
4: Reporting unit
100, 100a, 300: Base station apparatus
110, 111: Controller
110a: Signature managing unit
110b: Resource managing unit
120: Scheduler
130: Receiver
140: Transmitter
150: Handover predicting unit
200, 200a: Mobile station apparatus
210: Receiver
220: Controller
230: Signature selecting unit
240: Resource selecting unit
250: Data processor
260: Transmitter

## Claims

1. A wireless base station apparatus, comprising:
a notifying unit which notifies a wireless mobile station apparatus in a handover state of a second transmission area as a transmission area for a random access signal, the second transmission area being different from the first transmission area reported as a transmission area for a random access signal in a handover destination.

2. The wireless base station apparatus according to claim 1, wherein:
the notifying unit notifies the wireless mobile station apparatus of the second transmission area together with the first transmission area.

3. The wireless base station apparatus according to claim 1, wherein:
each of the first and the second transmission areas is an area defined by a channel identifying the wireless mobile station apparatus.

4. The wireless base station apparatus according to claim 1, further comprising a scheduler which performs data allocation control excluding the second transmission area.

5. The wireless base station apparatus according to claim 1, further comprising a determining unit which determines whether the first transmission area is insufficient;
wherein the notifying unit notifies the wireless mobile station apparatus of the second transmission area according to a determination result of the determining unit.

6. The wireless base station apparatus according to claim 1, further comprising a predicting unit which predicts that a predetermined number or more of handovers simultaneously occur;
wherein the notifying unit notifies the wireless mobile station apparatus of the second transmission area according to a prediction result of the predicting unit.

7. A wireless base station apparatus, comprising:
a receiver which receives information on a wireless mobile station apparatus in a handover state from a handover-source wireless base station apparatus of the wireless mobile station apparatus; and
a notifying unit which notifies the wireless mobile station apparatus of a second transmission area via the handover-source wireless base station apparatus, the second transmission area being different from a first transmission area reported as a transmission area for a random access signal.

8. A wireless mobile station apparatus for transmitting a random access signal, comprising:
a receiver which receives a notification of a second transmission area during handover, the second transmission area being different from a first transmission area reported by a handover-destination wireless base station apparatus; and
a transmitter which transmits a random access signal using the notified second transmission area.

9. A transmission control method for a random access signal, comprising:
notifying a wireless mobile station apparatus in a handover state of a second transmission area which is different from a first transmission area reported as a transmission area for a random access signal in a handover destination; and
receiving a random access signal transmitted from the wireless mobile station apparatus using the second transmission area.
